# EUROPÄISCHE PATENTSCHRIFT

(11) **EP 1 674 648 B1**
(45) Veröffentlichungstag und Bekanntmachung des Hinweises auf die Patenterteilung: **09.11.2011**
(21) Anmeldenummer: 05026776.4
(22) Anmeldetag: 08.12.2005
(51) Int. Cl.: E06B 1/00, E06B 3/00, F24F 13/18, F24F 5/00, F24F 7/013, E06B 7/02, E06B 7/10

(54) **Elementmodul zum Einbau in Fassaden und dergleichen**
Modular element for mounting in façades and the like
Élément modulaire pour montage en façade ou analoge

(30) Priorität: 23.12.2004 DE 102004062053
(43) Veröffentlichungstag der Anmeldung: 28.06.2006
(73) Patentinhaber: NORSK HYDRO ASA, 0240 Oslo (NO)
(72) Erfinder: Jager, Werner, 89264 Weissenhorn (DE); Brüderl, Dietmar, 88451 Dettingen (DE); Jiaxian, Xu, 89077 Ulm (DE); Philipp, Müller, 89257 Illertissen (DE)
(74) Vertreter: Dziewior, Joachim

(56) Entgegenhaltungen:
- DE-A1- 2 500 621
- DE-A1- 3 828 852

## Beschreibung

Es ist aus der Fassadentechnik in sehr vielseitigen Ausführungsvarianten bekannt, in Fassaden unterschiedliche Elemente, also Ausfachungselemente einzusetzen, die dem jeweiligen Anwendungsfall entsprechend gestaltet sein können. Die Unterschiede bestehen unter anderem in der Art der Verglasung, die insbesondere vom Anwendungsort abhängig unterschiedliche Wärmedämmungseigenschaften aufweisen kann. Zusätzlich können in solchen Elementen zum Beispiel Beschattungseinrichtungen angeordnet sein, deren Lamellen - abhängig vom Sonnenstand - entsprechend beeinflusst werden können. Darüberhinaus weisen diese Elemente oftmals Fensterflügel auf, über die eine natürliche Belüftung des Gebäudes vorgenommen werden kann.

Neben dem Einbau dieser Elemente müssen in der Regel Einrichtungen zur Heizung beziehungsweise Kühlung der Räume vorgesehen werden, die teilweise in die Fassade integriert oder auch völlig unabhängig davon installiert sein können. Schließlich müssen die in der Fassade angeordneten, beeinflussbaren Einrichtungen, also beispielsweise die Beschattungseinrichtungen, an entsprechende Steuergeräte angeschlossen werden, die wiederum in Abstimmung mit der Heizung beziehungsweise Klimatisierung zu steuern sind.

Aus der DE 3828852 A1 ist eine Lüftungseinrichtung zur konstruktiven Einbindung in den Fenster- und Fassadenbereich bekannt, die eine Belüftung mit höherem Volumenstrom bei gleichzeitig geringem Bauvolumen ermöglicht, wodurch eine optimale Querschnittsnutzung bei minimalem Kempferabstand sowie geringem Materialeinsatz und kurzen Fertigungszeiten erreicht wird.

Die DE 2500621 beschreibt ein Wand- und Fenster-Element als Heiz- und Kühl-Element, bei welchem mit Hilfe einer Sandwichwand zur Außenseite eine starke Isolation erreicht wird, während zur Innenseite eine wärmeleitende Platte montiert ist.

Will man die heute wünschenswerten oder erforderlichen Elemente im Fassadenbereich vorsehen, so führt dies im Ergebnis zu einem relativ großen Aufwand unter Hinzuziehung von Facharbeitern der einzelnen Gewerbe.

Der Erfindung liegt die Aufgabe zugrunde, ein Elementmodul zum Einbau in Fassaden zu schaffen, durch das eine wesentlich vereinfachte und auch durch den die Fassade erstellenden Metallbauer durchzuführende Installation der der Klimatisierung, Energiegewinnung, Beleuchtung und weiterer technischer Einrichtungen des Gebäudes dienenden Elemente und Systeme ermöglicht.

Diese Aufgabe wird gelöst durch ein Elementmodul, das gekennzeichnet ist durch ein Modulgehäuse mit Befestigungsmitteln für die Fassadenkonstruktion und für benachbarte Ausfachungselemente, mit von der Fassadenaußenseite zur Fassadeninnenseite sich erstreckenden, schließbaren Zuluft- und Abluftöffnungen, und mit zur Fassadeninnenseite hin offenen Umluftöffnungen, die mit einer im Modulgehäuse angeordneten Umlufteinrichtung in Verbindung stehen, sowie mit am Modulgehäuse außenseitig angeordneten Sonnenenergiegewinnungselementen, die über Regelbausteine unmittelbar im Modulgehäuse vorgesehene Bauteile mit Energie versorgen und im Modulgehäuse angeordnete Energiespeicher speisen.

Der durch die Erfindung erreichte Vorteil besteht im wesentlichen darin, daß die gesamte für die Klimatisierung und Belüftung des Gebäudes erforderliche Technik in dem Elementmodul integriert ist, also fertig vorkonfektioniert auf die Baustelle bzw. zum Fassadenbauer in die Werkstatt kommt, so daß der Einbau in die Fassade vorgenommen werden kann, ohne daß es hierzu unterschiedlicher Fachkräfte bedarf, die ergänzende elektrische oder sanitäre Arbeiten vornehmen müssen. Durch die Zusammenfassung der technischen Einrichtungen in einem gemeinsamen Modulgehäuse ergeben sich kurze Verbindungsleitungen und somit eine effiziente Arbeitsweise der darin angeordneten Bauteile. Darüberhinaus konzentrieren sich eventuell erforderliche Wartungsarbeiten allein auf das Elementmodul. Schließlich besteht auch die Möglichkeit, ein derartiges Element bedarfsweise später nachzurüsten, beziehungsweise eine Umrüstung vorzunehmen, sofern zusätzliche Funktionen erwünscht sind. Ebenso einfach kann ein Austausch des gesamten Elementmoduls beispielsweise zu Wartungs- oder Reparaturzwecken erfolgen.

Hierbei ist es vorteilhaft, wenn das Elementmodul mit Steckverbindern für in benachbarten Ausfachungselementen angeordnete Sonnenenergiegewinnungselemente versehen ist. Soweit daher Verbindungen zu benachbarten Elementen herzustellen sind, können diese durch einfache konfektionierte Steckverbindungen bewerkstelligt werden, so daß es auch insoweit keiner Fachleute bedarf.

Weiter kann im Rahmen der Erfindung vorgesehen sein, daß das Elementmodul mit Steuereinheiten für über Verbindungsleitungen angeschlossene, in benachbarten Ausfachungselementen vorgesehene Beschattungs- und Beleuchtungseinrichtungen versehen ist. Dadurch sind kurze, auch über die Sonnenenergiegewinnungselemente beeinflußbare Ansteuerungen dieser Einrichtungen möglich.

Vorteilhaft kann es darüberhinaus sein, wenn das Elementmodul mit Steckverbindungsanschlüssen zur Ankopplung der Regelbausteine und Steuereinheiten an eine System-Busleitung versehen ist. Dies ermöglich dann eine zentrale Ansteuerung, wie sie in der Hausleittechnik üblich ist.

In bevorzugter Ausführungsform besitzt das Modulgehäuse eine im wesentlichen U-profilförmige bzw. wannenförmige, eine Wartungsöffnung bildende Gestalt, wobei die beiden Profilschenkel zur Fassadeninnseite weisen. Damit ist ein bequemer Zugang des Modulgehäuses von der Gebäudeinnenseite her möglich, wobei in weiter vorteilhafter Ausgestaltung der Erfindung die Wartungsöffnung des Modulgehäuses durch eine Abdeckwand geschlossen ist. Diese Abdeckwand kann beliebig gestaltet, insbesondere auch als Holzpaneel ausgebildet sein.

Die gebäudeinnenseitigen Zuluft- und Abluftöffnungen sowie die Umluftöffnungen am oberen beziehungsweise unteren Ende des Modulgehäuses münden zweckmäßigerweise in am Modulgehäuse angeschlossenen Lochrasterplatten. Diese können fest oder auch lösbar mit dem Modulgehäuse verbunden sein.

Die Umlufteinrichtung kann in vorteilhafter Weiterbildung mit einem Heiz- und/oder Kühlaggregat versehen sein, wodurch die Möglichkeit besteht, im Umluftbetrieb wahlweise das Gebäudeinnere zu heizen oder zu kühlen. Dabei kann das Heiz- beziehungsweise Kühlaggregat entweder in üblicher Weise vom Stromnetz gespeist, in bevorzugter Ausführungsform der Erfindung jedoch auch aus den Sonnenenergiegewinnungselementen und/oder dem Energiespeicher gespeist werden.

Die Sonnenenergiegewinnungselemente können - je nach bevorzugter Technologie - von Fotovoltaikelementen oder von Sonnenkollektoren gebildet sein.

Entsprechend kann der Energiespeicher von einem Wärmespeicher, einem Akkumulator, einer Brennstoffzelle oder dergleichen gebildet sein.

Im übrigen ist das Modulgehäuse - wie im übrigen auch bei der Fassade üblich - mit einer thermischen Trennebene versehen, wie hier - wegen des Einbaus der Bauelemente und der Zugänglichkeit von der Gebäudeinnenseite her - zur Fassadenaußenseite hin verlagert ist.

Von Vorteil ist hierbei, wenn die thermische Trennebene von einem Vakuum-Dämmelement oder einem PU-Dämmelement gebildet ist oder die Wandung des Elementmoduls als Hartschaumwanne ausgebildet ist.

Im übrigen empfiehlt es sich weiter, die Verbindungsleitungen und/oder Steckverbinder über wasserdichte und/oder luftdichte Durchführungen zur Aussenseite des Elementmoduls geführt sind.

Schließlich ist die Anordnung des Modulgehäuses derart vorgesehen, daß die das Modulgehäuse schließende Abdeckwand bündig zur Gebäudeinnenwand verläuft.

Im folgenden wird die Erfindung an einem in der Zeichnung dargestellten Ausführungsbeispiel näher erläutert; es zeigen:

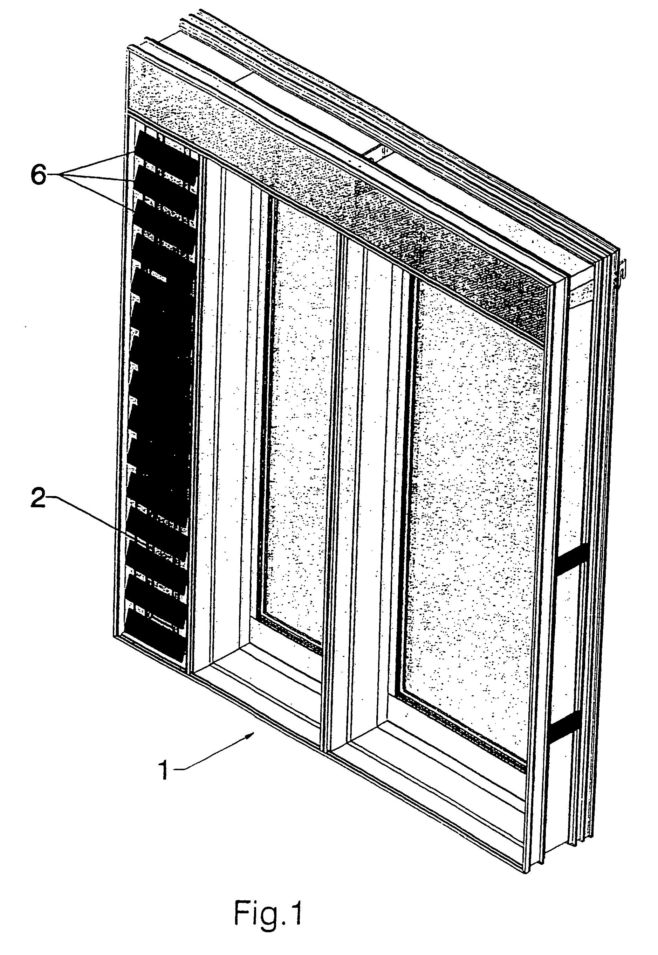

- Fig. 1: ein Fassadenelement mit einem Elementmodul in perspektivischer Ansicht von außen,

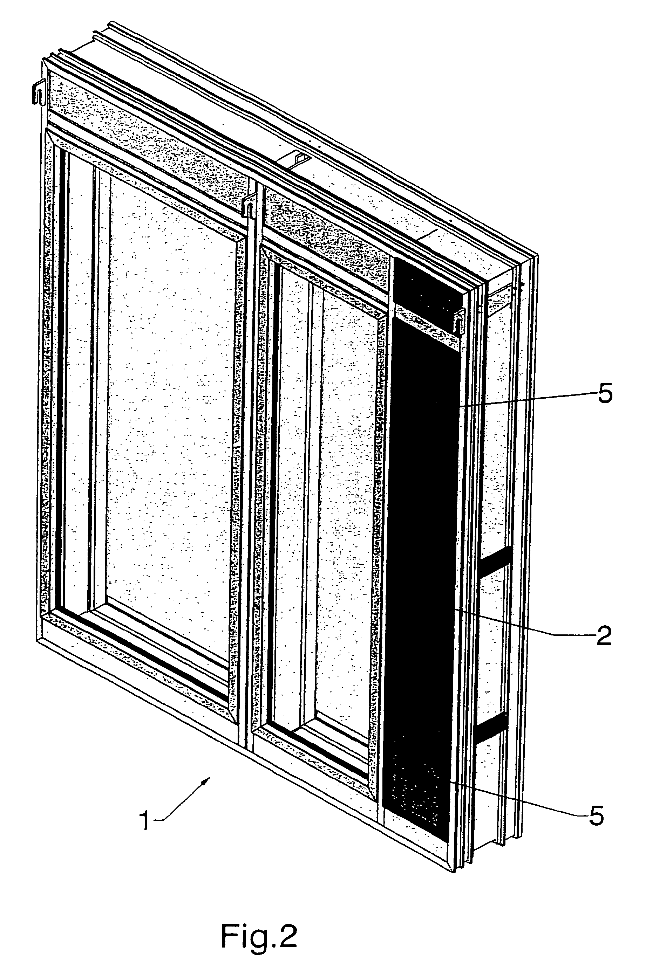

- Fig. 2: ein Fassadenelement mit einem Elementmodul in perspektivischer Ansicht von innen,

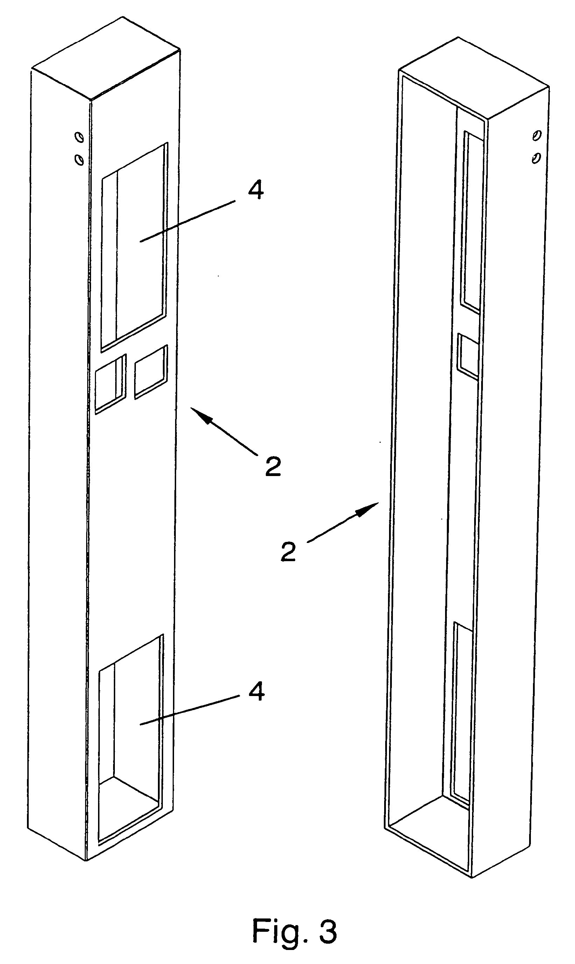

- Fig. 3: ein Elementmodul ohne Einbauten in zwei unterschiedlichen perspektivischen Ansichten,

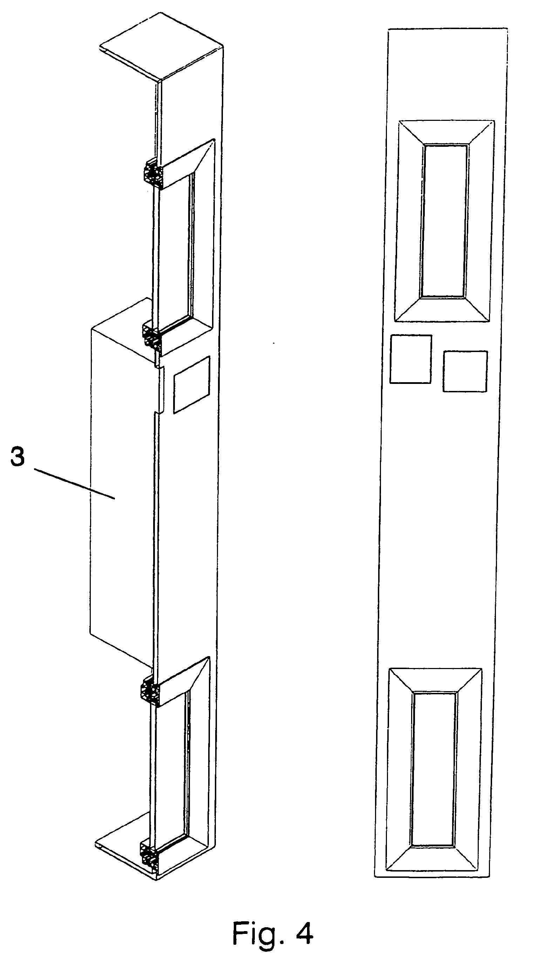

- Fig. 4: ein Elementmodul mit Einbauten in zwei unterschiedlichen perspektivischen Ansichten,

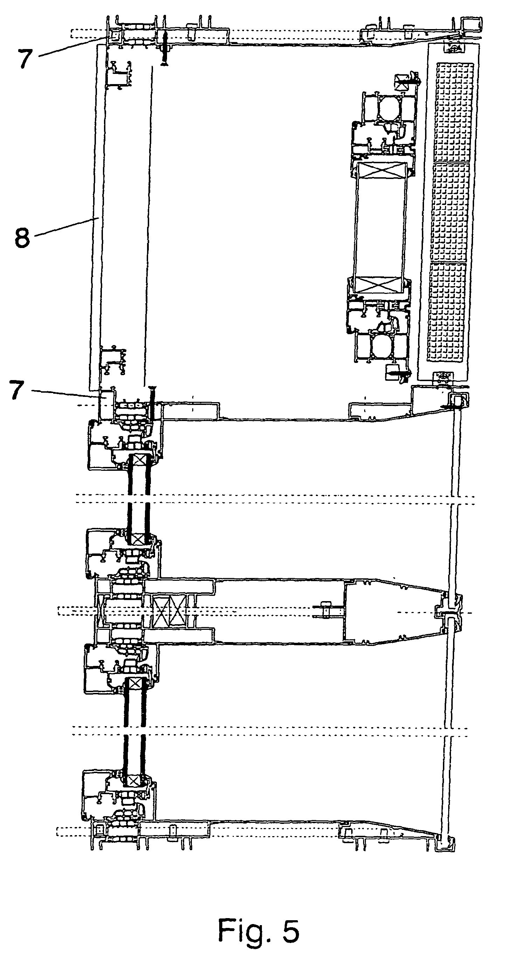

- Fig. 5: einen Horizontalschnitt durch eine nur teilweise dargestellte Gebäudefassade mit dem erfindungsgemäßen Elementmodul,

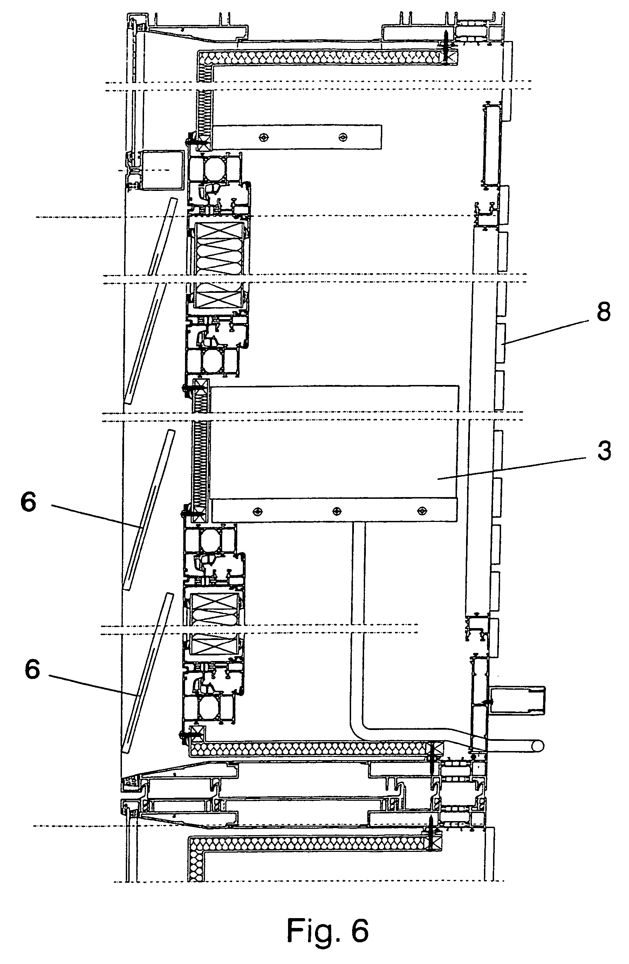

- Fig. 6: einen Vertikalschnitt durch den Gegenstand nach Fig. 5.

Die in der Zeichnung nur angedeutete Gebäudefassade setzt sich aus neben- und übereinander angeordneten Ausfachungselementen 1 zusammen, die beispielsweise aus Verglasungselementen bestehen können. Zusätzlich sind in die Fassade Elementmodule 2 eingesetzt, wobei deren Anordnung innerhalb der Fassade weitgehend willkürlich vorgenommen werden kann. So besteht die Möglichkeit, neben jedem Ausfachungselement 1 jeweils ein Elementmodul 2 einzusetzen; ebenso kann auch nur neben jedem zweiten oder jedem dritten Ausfachungselement 1 ein solches Elementmodul 2 angeordnet sein. Es besteht auch die Möglichkeit, nachträglich ein Ausfachungselement 1 durch ein entsprechend kürzeres sowie zusätzlich ein Elementmodul 2 zu ersetzen.

Dazu ist das Modulgehäuse mit geeigneten Befestigungsmitteln versehen, durch die es an die Fassadenkonstruktion und/oder an benachbarte Ausfachungselemente angeschlossen werden kann.

Das Elementmodul 2 kann dabei mit standartisierten Abmessungen versehen sein und in seinem Inneren in unterschiedlichem Umfang mit der Belüftung, Heizung, Kühlung und Beleuchtung dienenden Bauteilen und Aggregaten ausgestattet sein, die vorzugsweise in einem in sich geschlossenen Gehäusebauteil 3 angeordnet sein können.

Im einzelnen kann das Elementmodul 2 dazu mit von der Fassadenaußenseite zur Fassadeninnenseite sich erstreckenden, schließbaren Zuluft- und Abluftöffnungen 4 versehen sein.

Weiter kann das Elementmodul 2 zur Fassadeninnenseite hin offene Umluftöffnungen 5 aufweisen, die mit einer im Modulgehäuse angeordneten Umlufteinrichtung in Verbindung stehen.

Weiter kann das Elementmodul 2 am Modulgehäuse außenseitig angeordnete oder mit Steckverbindern für in benachbarten Ausfachungselementen angeordnete Sonnenenergiegewinnungselemente 6 versehen sein, die über Regelbausteine unmittelbar im Modulgehäuse vorgesehene Bauteile mit Energie versorgen. Zusätzlich oder alternativ können diese Sonnenenergiegewinnungselemente jedoch auch im Modulgehäuse angeordnete Energiespeicher speisen.

Weiter kann das Elementmodul 2 Steuereinheiten aufweisen, die über Steckverbinder angeschlossene, in benachbarten Ausfachungselementen vorgesehene Beschattungs- und/oder Beleuchtungseinrichtungen ansteuern.

Schließlich können am Elementmodul 2 auch noch Steckverbindungsanschlüsse vorgesehen sein, die der Ankopplung der Regelbausteine und Steuereinheiten an eine System-Busleitung dienen.

Das derart aufgebaute Elementmodul 2 besitzt den Vorteil, daß es in der für den jeweiligen Einbauort vorgesehenen Ausstattung voll funktionsfertig an die Baustelle angeliefert werden kann, so daß es von den die Fassade errichtenden Metallbauern eingebaut und - wegen der Verwendung standartisierter Verbinder und Anschlüsse - auch ohne Hinzuziehung weiterer Fachkräfte in funktionsfähigen Zustand versetzt werden kann. Es ist somit nicht notwendig, nach Fertigstellung der Fassade Belüftungs-, Heizungs-, Klimatisierungs- und Beleuchtungseinrichtungen separat zu installieren.

Insbesondere besitzt dieses Elementmodul 2 die Fähigkeit, völlig autark zu arbeiten, so daß grundsätzlich allenfalls ein Anschluß an das Stromnetz erforderlich ist. Selbstverständlich lässt sich ein solches Elementmodul 2 jedoch auch im Rahmen üblicher Gebäudesystemtechnik einsetzen, da hier wiederum ein einziger Anschluß an eine System-Busleitung über eine konfektionierte Steckverbindung ausreichend ist, um im Rahmen der Gebäudeleittechnik jedes einzelne Elementmodul 2 auch individuell zu steuern.

Das Modulgehäuse weist eine im wesentlichen U-profilförmige Gestalt auf, wobei die Öffnung der beiden Profilschenkel 7 eine Wartungsöffnung bilden, die zur Gebäudeinnenseite hin offen ist. Diese Wartungsöffnung ist bei gebrauchsfertigem Einbau durch eine Abdeckwand 8 geschlossen, wobei die Möglichkeit besteht, diese Abdeckwand 8 entsprechend der übrigen Innenraumgestaltung zu wählen. Insbesondere kann die Abdeckwand 8 auch als Holzpaneel ausgebildet sein, wobei die Anordnung und Gestaltung des Elementmoduls 2 so gewählt ist, daß die Abdeckwand 8 bündig zur Gebäudeinnenwand verläuft.

Die gebäudeinnenseitigen Zuluft- und Abluftöffnungen sowie die Umluftöffnungen am oberen beziehungsweise unteren Ende des Modulgehäuses münden in am Modulgehäuse angeschlossenen Lochrasterplatten, die ebenfalls bündig zur Abdeckwand verlaufen.

Die Umlufteinrichtung kann in in der Zeichnung nicht näher dargestellter Weise mit einem Heiz- und/oder Kühlaggregat versehen sein, wobei die Möglichkeit besteht, das Heizbeziehungsweise Kühlaggregat entweder aus dem Stromnetz zu speisen oder zusätzlich beziehungsweise alternativ aus den Sonnenenergiegewinnungselementen oder - soweit vorhanden - dem Energiespeicher.

Als Sonnenenergiegewinnungselemente kommen alle derzeit geeigneten Anordnungen in Frage; insbesondere bieten sich hierfür Fotovoltaikelemente oder Sonnenkollektoren an.

Ebenfalls bieten sich als Energiespeicher alle vergleichbar geeigneten Elemente an; insbesondere können dies ein Wärmespeicher, ein Akkumulator, eine Brennstoffzelle oder ähnliches sein.

Die thermische Trennebene des Elementmoduls 2 kann in nicht näher dargestellter Weise von einem Vakuum-Dämmelement oder einem PU-Dämmelement gebildet sein. Es besteht jedoch auch die Möglichkeit, daß die Wandung des Elementmoduls 2 selbst als Hartschaumwanne ausgebildet ist.

Weiter sind in ebenfalls in der Zeichnung nicht wiedergegebener Weise die Verbindungsleitungen und/oder Steckverbinder über wasserdichte und/oder luftdichte Durchführungen zur Aussenseite des Elementmoduls 2 geführt.

Schließlich ist das Modulgehäuse - entsprechend der übrigen Fassade - mit einer thermischen Trennebene versehen, die hier jedoch - wegen des Einbaues der einzelnen Baugruppen - zur Fassadenaußenseite hin verlagert ist.

## Patentansprüche

1. Elementmodul zum Einbau in Fassaden und dergl., **gekennzeichnet durch** ein Modulgehäuse mit Befestigungsmitteln für die Fassadenkonstruktion und für benachbarte Ausfachungselemente (1), mit von der Fassadenaußenseite zur Fassadeninnenseite sich erstreckenden, schließbaren Zuluft- und Abluftöffnungen (4), und mit zur Fassadeninnenseite hin offenen Umluftöffnungen (5), die mit einer im Modulgehäuse angeordneten Umlufteinrichtung in Verbindung stehen, sowie mit am Modulgehäuse außenseitig angeordneten Sonnenenergiegewinnungselementen (6), die über Regelbausteine unmittelbar im Modulgehäuse vorgesehene Bauteile mit Energie versorgen und im Modulgehäuse angeordnete Energiespeicher speisen.

2. Elementmodul nach Anspruch 1, **dadurch gekennzeichnet, daß** es mit Steckverbindern für in benachbarten Ausfachungselementen (1) angeordnete Sonnenenergiegewinnungselemente (6) versehen ist.

3. Elementmodul nach Anspruch 1 oder 2, **dadurch gekennzeichnet, daß** es mit Steuereinheiten für über Verbindungsleitungen angeschlossene, in benachbarten Ausfachungselementen vorgesehene Beschattungs- und Beleuchtungseinrichtungen versehen ist.

4. Elementmodul nach einem der Ansprüche 1 bis 3, **dadurch gekennzeichnet, daß** es mit Steckverbindungsanschlüssen zur Ankopplung der Regelbausteine und Steuereinheiten an eine System-Busleitung versehen ist.

5. Elementmodul nach einem der Ansprüche 1 bis 4, **dadurch gekennzeichnet, daß** das Modulgehäuse eine im wesentlichen U-profilförmige bzw. wannenförmige, eine Wartungsöffnung bildende Gestalt besitzt, wobei seine beiden Profilschenkel (7) zur Fassadeninnenseite weisen.

6. Elementmodul nach Anspruch 5, **dadurch gekennzeichnet, daß** die Wartungsöffnung des Modulgehäuses durch eine Abdeckwand (8) geschlossen ist.

7. Elementmodul nach Anspruch 6, **dadurch gekennzeichnet, daß** die Abdeckwand (8) als Holzpaneel ausgebildet ist.

8. Elementmodul nach einem der Ansprüche 1 bis 7, **dadurch gekennzeichnet, daß** die gebäudeinnenseitigen Zuluft- und Abluftöffnungen (4) sowie die Umluftöffnungen (5) am oberen bzw. unteren Ende des Modulgehäuses in am Modulgehäuse angeschlossenen Lochrasterplatten münden.

9. Elementmodul nach einem der Ansprüche 1 bis 7, **dadurch gekennzeichnet, daß** die Umlufteinrichtung mit einem Heiz- und/oder Kühlaggregat versehen ist.

10. Elementmodul nach Anspruch 9, **dadurch gekennzeichnet, daß** das Heiz- bzw. Kühlaggregat aus den Sonnenenergiegewinnungselementen (6) und/oder dem Energiespeicher gespeist wird.

11. Elementmodul nach einem der Ansprüche 1 bis 10, **dadurch gekennzeichnet, daß** die Sonnenenergiegewinnungselemente (6) von Photovoltaikelementen oder Sonnenkollektoren gebildet sind.

12. Elementmodul nach einem der Ansprüche 1 bis 11, **dadurch gekennzeichnet, daß** der Energiespeicher von einem Wärmespeicher, einem Akkumulator, einer Brennstoffzelle oder dergleichen gebildet ist.

13. Elementmodul nach einem der Ansprüche 1 bis 12, **dadurch gekennzeichnet, daß** das Modulgehäuse mit einer thermischen Trennebene versehen ist, die zur Fassadenaußenseite hin verlagert ist.

14. Elementmodul nach Anspruch 13, **dadurch gekennzeichnet, daß** die thermische Trennebene von einem Vakuum-Dämmelement oder einem PU-Dämmelement gebildet ist oder die Wandung des Elementmoduls als Hartschaumwanne ausgebildet ist.

15. Elementmodul nach einem der Ansprüche 1 bis 14, **dadurch gekennzeichnet, daß** die Verbindungsleitungen und/oder Steckverbinder über wasserdichte und/oder luftdichte Durchführungen zur Aussenseite des Elementmoduls geführt sind.

16. Elementmodul nach einem der Ansprüche 6 bis 15, **dadurch gekennzeichnet, daß** eine das Modulgehäuse schließende Abdeckwand (8) bündig zur Gebäudeinnenwand verläuft.

## Claims

1. An element module for installation in facades and the like **characterised by** a module housing with fixing means for the facade construction and for adjacent infilling elements (1), with closable air feed and air discharge openings (4) extending from the facade outside to the facade inside, and circulatory air openings (5) which are open towards the facade inside and which communicate with a circulatory air device arranged in the module housing, and solar energy production elements (6) which are arranged on the module housing on the outside and which supply energy to components provided in the module housing directly by way of regulating units and feed energy storage means arranged in the module housing.

2. An element module according to claim 1 **characterised in that** it is provided with plug connectors for solar energy production elements (6) arranged in adjacent infilling elements (1).

3. An element module according to claim 1 or claim 2 **characterised in that** it is provided with controlled units for shading and illumination devices connected by way of connecting lines and provided in adjacent infilling elements.

4. An element module according to one of claims 1 to 3 **characterised in that** it is provided with plug connection connectors for coupling the regulating units and control units to a system bus line.

5. An element module according to one of claims 1 to 4 **characterised in that** the module housing is of a configuration which is substantially trough-shaped or shaped as a U-profile and which forms a maintenance opening, wherein its two profile limbs (7) face towards the facade inside.

6. An element module according to claim 5 **characterised in that** the maintenance opening of the module housing is closed by a cover wall (8).

7. An element module according to claim 6 **characterised in that** the cover wall (8) is in the form of a wood panel.

8. An element module according to one of claims 1 to 7 **characterised in that** the air feed and air discharge openings (4) at the inside of the building and the circulatory air openings (5) open at the upper and lower ends respectively of the module housing in apertured grid plates connected to the module housing.

9. An element module according to one of claims 1 to 7 **characterised in that** the circulatory air device is provided with a heating and/or cooling assembly.

10. An element module according to claim 9 **characterised in that** the heating or cooling assembly is fed from the solar energy production elements (6) and/or the energy storage means.

11. An element module according to one of claims 1 to 10 **characterised in that** the solar energy production elements (6) are formed by photovoltaic elements or solar collectors.

12. An element module according to one of claims 1 to 11 **characterised in that** the energy storage means is formed by a heat storage means, an accumulator, a fuel cell or the like.

13. An element module according to one of claims 1 to 12 **characterised in that** the module housing is provided with a thermal separation plane which is displaced towards the facade outside.

14. An element module according to claim 13 **characterised in that** the thermal separation plane is formed by a vacuum barrier element or a PU barrier element or the wall of the element module is in the form of a hard foam shell.

15. An element module according to one of claims 1 to 14 **characterised in that** the connecting lines and/or plug connectors are passed by way of water-tight and/or air-tight pass-through means to the outside of the element module.

16. An element module according to one of claims 6 to 15 **characterised in that** a cover wall (8) closing the module housing extends flush with respect to the inside wall of the building.

## Revendications

1. Module d'élément pour le montage dans des façades et constructions similaires, **caractérisé par** un boîtier de module avec des moyens de fixation pour la construction de façade et pour des éléments de remplissage avoisinants (1), avec des ouvertures d'arrivée d'air et d'évacuation d'air (4) pouvant être fermées, s'étendant du côté extérieur de la façade au côté intérieur de la façade, et avec des ouvertures de circulation d'air (5) ouvertes vers le côté intérieur de la façade, qui sont en liaison avec un dispositif de circulation d'air disposé dans un boîtier de module, ainsi qu'avec des éléments de récupération de l'énergie solaire (6) disposés du côté extérieur dans un boîtier de module, qui, via des modules de régulation, alimentent en énergie des éléments de construction prévus directement dans le boîtier de module et alimentent des accumulateurs d'énergie disposés dans le boîtier de module.

2. Module d'élément suivant la revendication 1, **caractérisé en ce qu'**il est pourvu de connecteurs pour des éléments de récupération de l'énergie solaire (6) disposés dans des éléments de remplissage (1) avoisinants.

3. Module d'élément suivant la revendication 1 ou 2, **caractérisé en ce qu'**il est pourvu d'unités de commande pour des dispositifs d'ombrage et d'éclairage prévus dans des éléments de remplissage avoisinants, raccordés via des lignes de connexion.

4. Module d'élément suivant l'une des revendications 1 à 3, **caractérisé en ce qu'**il est pourvu de raccordements par connecteurs pour le couplage des 5modules de régulation et des unités de commande à une ligne de bus système.

5. Module d'élément suivant l'une des revendications 1 à 4, **caractérisé en ce que** le boîtier de module possède un corps essentiellement en forme de profilé en U ou en forme d'auge formant une ouverture de maintenance, ses deux jambes profilées (7) étant orientées vers le côté intérieur de la façade.

6. Module d'élément suivant la revendication 5, **caractérisé en ce que** l'ouverture de maintenance du boîtier de module est fermée par une paroi de recouvrement (8).

7. Module d'élément suivant la revendication 6, **caractérisé en ce que** la paroi de recouvrement (8) est conçue comme panneau en bois.

8. Module d'élément suivant l'une des revendications 1 à 7, **caractérisé en ce que** les ouvertures d'arrivée d'air et d'évacuation d'air (4) situées du côté intérieur du bâtiment ainsi que les ouvertures de circulation d'air (5) à l'extrémité supérieure et à l'extrémité inférieure du boîtier de module débouchent dans des plaques perforées raccordées au boîtier de module.

9. Module d'élément suivant l'une des revendications 1 à 7, **caractérisé en ce que** le dispositif de recirculation d'air est pourvu d'un groupe de chauffage et/ou de refroidissement.

10. Module d'élément suivant la revendication 9, **caractérisé en ce que** le groupe de chauffage et/ou de refroidissement est alimenté par les éléments de récupération de l'énergie solaire (6) et/ou l'accumulateur d'énergie.

11. Module d'élément suivant l'une des revendications 1 à 10, **caractérisé en ce que** les éléments de récupération de l'énergie solaire (6) sont constitués d'éléments photovoltaïques ou de panneaux solaires.

12. Module d'élément suivant l'une des revendications 1 à 11, **caractérisé en ce que** l'accumulateur d'énergie est constitué d'un accumulateur de chaleur, d'un accumulateur, d'une pile à combustible ou similaire.

13. Module d'élément suivant l'une des revendications 1 à 12, **caractérisé en ce que** le boîtier de module est pourvu d'un plan de séparation thermique, qui est décalé vers le côté extérieur de la façade.

14. Module d'élément suivant la revendication 13, **caractérisé en ce que** le plan de séparation thermique est constitué d'un élément d'isolation sous vide ou d'un élément d'isolation PU ou **en ce que** la paroi du module d'élément est formée comme auge en mousse rigide.

15. Module d'élément suivant l'une des revendications 1 à 14, **caractérisé en ce que** les lignes de connexion et/ou les connecteurs sont guidés vers le côté extérieur du module d'élément via des traversées étanches à l'eau et/ou étanches à l'air.

16. Module d'élément suivant l'une des revendications 6 à 15, **caractérisé en ce qu'**une paroi de recouvrement (8) fermant le boîtier de module s'étend à fleur de la paroi intérieure du bâtiment.
